Europäisches Patentamt

European Patent Office

Office européen des brevets

(11) Veröffentlichungsnummer: **0 332 816**

**A2**

## EUROPÄISCHE PATENTANMELDUNG

(21) Anmeldenummer: 89101091.0

(22) Anmeldetag: 23.01.89

(51) Int. Cl.⁴: **B23B 25/02**

(30) Priorität: 15.03.88 DE 8803460 U

(43) Veröffentlichungstag der Anmeldung:
20.09.89 Patentblatt 89/38

(84) Benannte Vertragsstaaten:
**DE FR GB IT**

(71) Anmelder: **Rheinmetall GmbH
Ulmenstrasse 125 Postfach 6609
D-4000 Düsseldorf(DE)**

(72) Erfinder: **Knäbel, Horst
Friedenstrasse 10a
D-4005 Meerbusch 1(DE)**

(54) **Vorrichtung zum Fixieren und Einspannen von Werkstücken.**

(57) Die Erfindung betrifft eine Vorrichtung zum Fixieren und Einspannen von Werkstücken. Mit der erfindungsgemäßen Vorrichtung wird das Einlegen der Werkstücke wesentlich erleichtert, wobei das Werkstück und die Vorrichtung selbst beim Zuführen des Werkstücks besser geschützt sind. Außerdem wird eine Kontrolle der eingespannten Stirnfläche des Werkstücks ermöglicht.

Die erfindungsgemäße Vorrichtung (10) weist ein Gehäuse (12) auf mit einem nach außen verjüngten Bund (14). Ein im Gehäuse (12) längsverschieblicher Zentrierdorn (16) ist in Ruheposition hinter eine äußere Stirnfläche (20) zurückziehbar, so daß er von einem vorstehenden Teil des Bundes (14) teilweise umschlossen und geschützt ist. In seinem vorderen Bereich ist der Bund (14) etwa bis zur Hälfte abgearbeitet, wobei der verbliebene Teil des Bundes (14) vorzugsweise in die Richtung weist, aus der das Werkstück eingelegt wird. Durch den freigearbeiteten Teil des Bundes (14) kann eine Stirnfläche (15) des Werkstücks (13) von einem Meßtaster (23) abgetastet und kontrolliert werden.

EP 0 332 816 A2

## Vorrichtung zum Fixieren und Einspannen von Werkstücken

Die Erfindung betrifft eine Vorrichtung zum Fixieren und Einspannen von Werkstücken, wie beispielsweise Wellen, Achsen und dergleichen, mit den Merkmalen im Oberbegriff des Anspruchs 1.

Beispielsweise von Drehbänken ist es bekannt, Werkstücke, insbesondere Wellen und dergleichen, in Haltevorrichtungen aufzunehmen, bzw. zu fixieren und zu halten, von denen wenigstens eine der Haltevorrichtungen als Zentrierdorn in einer Reitstock-ähnlichen Konsole ausgebildet ist, wobei der Zentrierdorn mechanisch, elektrisch, hydraulisch oder pneumatisch betätigt an das Werkstück herangeführt und dieses durch Anpressen seines Kopfteils (meist eine Spitze) zwischen den Haltevorrichtungen eingespannt werden kann. In diesen Fällen wird das Werkstück an der Spitze des Zentrierdorns vorbeigeführt, bevor seine Aufnahme zwischen der oder den Spitzen erfolgen kann. Dabei besteht die Gefahr, daß das Werkstück und oder auch die Spitze(n) beschädigt werden können. In den Fällen, in denen das Werkstück von Hand eingelegt wird, stellen diese Spitzen außerdem eine permanente Verletzungsgefahr dar.

Der Erfindung liegt daher die Aufgabe zugrunde, eine Vorrichtung zum Fixieren und Spannen von Werkstücken, insbesondere von Wellen, Achsen und dergleichen, zu schaffen, die unter Vermeidung der Nachteile der bekannten Vorrichtungen das Einführen des Werkstücks verbessert, so daß eine Beschädigung des Werkstücks und/oder des Kopfteils des Zentrierdorns und eine mögliche Verletzung von Benutzern verhindert wird.

Diese Aufgabe wird gelöst von einer erfindungsgemäßen Vorrichtung mit den Merkmalen des kennzeichnenden Teils des Anspruchs 1.

Vorteilhafte Ausgestaltungen der Erfindung gehen aus den Unteransprüchen hervor.

In vorteilhafter Weise ermöglicht die erfindungsgemäße Vorrichtung eine wesentliche Erleichterung beim Einlegen des Werkstückes, da der im Gehäuse längsverschiebliche Zentrierdorn zum Einlegen des Werkstückes in das Gehäuse zurückgezogen werden kann. Dies gilt sowohl bei manueller Beschickung als auch bei Beschickung durch eine automatische Vorrichtung, die entsprechend weniger genau zuführen muß, da von einer solchen automatischen Zuführ-Vorrichtung das einzulegende Werkstück bis auf etwa 0,5 bis 1 mm an die erfindungsgemäße Vorrichtung vor dem Einlegen herangeführt werden kann.

Ein weiterer Vorteil der erfindungsgemäßen Vorrichtung besteht darin, daß sie bei Verwendung in Meßvorrichtungen durch die besondere erfindungsgemäße Ausgestaltung des Bundes für einen Tastkopf der Meßvorrichtung einen solchen Freiraum schafft, der es ermöglicht, das eingelegte und über das anstellbare Kopfteil des Zentrierdorns eingespannte Werkstück stirnseitig anzutasten und zu vermessen. Der zum Werkstück gerichtete und zur Einlegerichtung weisende, vorstehende Teil des Bundes schützt in vorteilhafter Weise bei einer entsprechenden Meßeinrichtung diese vor Beschädigung durch das Werkstück beim Einlegen.

Die Erfindung wird nachfolgend anhand eines Ausführungsbeispiels, unter Zuhilfenahme einer Zeichnung, näher erläutert und beschrieben.

Dabei zeigen:

Figur 1: ein Längsschnitt durch ein Ausführungsbeispiel der erfindungsgemäßen Vorrichtung; entlang eine durch I - I in Figur 2 veranschaulichten Schnittlinie;

Figure 2 eine Ansicht auf eine dem Werkstück zugewandte Stirnfläche der Vorrichtung gemäß Figur 1.

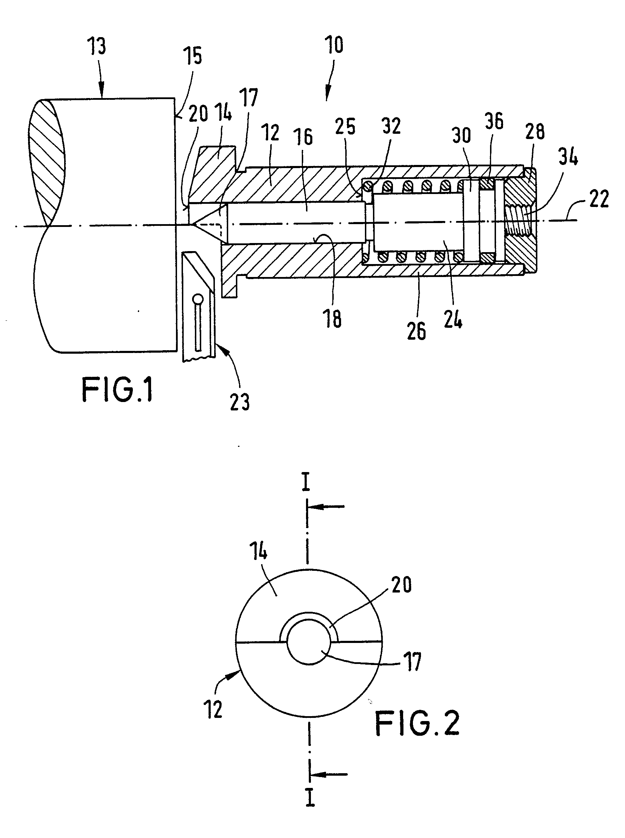

Die erfindungsgemäße Vorrichtung 10 weist ein Gehäuse 12 auf mit einem einem hier nur angedeutet dargestellten Werkstück 13 mit einer Stirnfläche 15 zugewandten, konisch nach außen verjüngten Bund 14. Das Gehäuse 12 enthält eine zentrale vordere Bohrung 18 zur Aufnahme des Zentrierdorns 16, der eine an das Werkstück 13 anstellbare Spitze 17 als Kopfteil besitzt. In Figur 1 ist die Vorrichtung 10 kurz nach Einlegen des Werkstückes 13, vor dem Fixieren dargestellt. Die Spitze 17 des Zentrierdorns 16 ist in das Gehäuse 12 hinter eine äußere Stirnfläche 20 des Gehäuses 12 zurückgezogen, und wird von einem vorstehenden Teil des Bundes 14 teilweise umschlossen und geschützt. In seinem vorderen Bereich ist der Bund 14 bis in einen Bereich seiner Mitte, der durch eine Längsachse 22 verdeutlicht wird, abgearbeitet. Der verbliebene Teil des Bundes 14 weist in die Richtung, aus der das Werkstück eingelegt wird. Durch den freigearbeiteten Teil des Bundes 14 ist es möglich, die Stirnfläche 15 des Werkstücks 13 von einem hier nur angedeutet dargestellten Meßtaster 23 anzutasten und zu kontrollieren.

Der Zentrierdorn 16 ist mit einem rückwärtigen, zylindrischen Teil 24 und einem sich daran anschließenden Kolben 30 verbunden, wobei der rückwärtige Teil 24 und der Kolben 30 von einer zentralen rückwärtigen Bohrung 26 im Gehäuse 12 aufgenommen werden. Ein Durchmesser der zentralen rückwärtigen Bohrung 26 ist größer als ein Durchmesser der zentralen vorderen Bohrung 18 des Gehäuses 12. Der Zentrierdorn 16, der mit ihm verbundene rückwärtige Teil 24 und der Kolben 30 sind im Gehäuse 12 entlang der Längsachse 22 längsverschieblich angeordnet.

Für die Zurückstellung des Zentrierdorns 16 ist eine Schraubenfeder 32 vorgesehen, die in der zentralen rückwärtigen Bohrung 26 den rückwärtigen Teil 24 umgreift. Die Schraubenfeder 32 stützt sich an einer Kante des Kolbens 30 und findet an einer Stirnfläche 25 der zentralen rückwärtigen Bohrung 26 ein Widerlager, so daß der Zentrierdorn 16 von der Schraubenfeder 32 federkraftbeaufschlagt ist.

Die zentrale rückwärtige Bohrung 26 des Gehäuses 12 der Vorrichtung 10 ist durch einen Deckel 28 verschlossen, der mit einem Anschluß 34 versehen ist, so daß der Kolben 30 durch ein pneumatisches oder hydraulisches Medium beaufschlagt werden kann. Mit Zuleitung des Druckmittels kann der Zentrierdorn 16 entgegen der Federkraft der Schraubenfeder 32 zur Anstellung an das Werkstück 13 bewegt werden, um dieses gegen ein entsprechendes Widerlager einzuspannen. Je nach Höhe der vom Druckmittel geforderten Betätigungskraft und nach Art des Druckmittels selbst ist eine dem Kolben 30 zugeordnete Dichtung 36 auszuwählen.

Bei Verwendung von zwei erfindungsgemäßen Vorrichtungen 10 zum Fixieren und Einspannen eines Werkstücks, insbesondere einer beidseitig zentrierten Welle, wird eine der Vorrichtungen als Festanschlag verwendet. Vorzugsweise wird dies dadurch erreicht, daß bei beiden Vorrichtungen mit unterschiedlichen Drücken oder mit unterschiedlich ausgebildeten, druckbeaufschlagten Flächen des Kolbens 30 gearbeitet wird. Jene Vorrichtung, die als zentrierender Festanschlag verwendet wird, wird vorzugsweise derart druckbeaufschlagt, daß der rückwärtige Teil 24 an der vorderen Stirnfläche 25 der rückwärtigen zentralen Bohrung 26 fest anliegt.

Die erfindungsgemäße Vorrichtung 10 kann ohne Einschränkung des Erfindungsgedankens auch für jede zu beschickende Bearbeitungs- oder Meßvorrichtung verwendet werden. Der Kopfteil 17 des Zentrierdorns 16 kann dabei jeweils der vorgegebenen Aufgabenstellung entsprechend gewählt werden, so daß auch eine ballig geformte Spitze oder ein flaches Kopfteil des Zentrierdorns 16 je nach Aufgabenstellung sinnvoll sein kann. Das an der Stirnfläche 20 des Bundes 14 vorbeigeführte Werkstück 13 wird empfehlenswerterweise auf einen etwas tiefer liegenden Anschlag, vorzugsweise einem Prisma, abgelegt und dann durch Druckmittelzufuhr über die herausfahrende anstellbare Spitze 17 des Zentrierdorns 16 in die gewünschte Position gehoben und eingespannt.

## Ansprüche

1. Vorrichtung zum Fixieren und Einspannen von Werkstücken, bestehend aus einem Gehäuse mit längsverschieblichem Zentrierdorn, **dadurch gekennzeichnet**, daß die Vorrichtung (10) ein Gehäuse (12) aufweist, das als Flanschbüchse mit einem konischen, nach außen verjüngten Bund (14) ausgebildet ist, der auf seiner dem Werkstück beim Einlegen abgewandten Seite teilweise bis zu einer Längsachse (22) abgearbeitet ist, und daß der in einer zentralen vorderen Bohrung (18) des Gehäuses (12) längsverschiebliche Zentrierdorn (16) mit einem Kopfstück (17) bis hinter eine äußere Stirnfläche (20) des Bundes (14) zurückstellbar ist.

2. Vorrichtung nach Anspruch 1, **dadurch gekennzeichnet**, daß der Zentrierdorn (16) mit einem rückwärtigen, zylindrischen Teil (24) und mit einem sich daran anschließenden Kolben (30) verbunden ist, wobei der rückwärtige Teil (24) und der Kolben (30) von einer zentralen rückwärtigen Bohrung (26) des Gehäuses (12) aufgenommen werden.

3. Vorrichtung nach Anspruch 2, **dadurch gekennzeichnet**, daß der rückwärtige, zylindrische Teil (24) in der zentralen rückwärtigen Bohrung (26) des Gehäuses (12) von einer Schraubenfeder (32) umschlossen und beaufschlagt wird, wobei die Schraubenfeder (32) zur Rückstellung des Zentrierdorns (16) dient.

4. Vorrichtung nach Anspruch 2 oder 3, **dadurch gekennzeichnet**, daß die zentrale rückwärtige Bohrung (26) im Gehäuse (12) von einem Deckel (28) verschlossen wird, der einen Anschluß (34) für hydraulische oder pneumatische Stellmedien aufweist.

5. Vorrichtung nach einem der Ansprüche 1 bis 4, **dadurch gekennzeichnet**, daß das Kopfstück (17) des Zentrierdorns (16) als Spitze mit verschiedenen Konus-Winkeln ausgebildet ist.

6. Vorrichtung nach einem der Ansprüche 1 bis 4, **dadurch gekennzeichnet**, daß das Kopfstück (17) des Zentrierdorns (16) ballig ausgebildet ist.

7. Vorrichtung nach einem der Ansprüche 1 bis 4, **dadurch gekennzeichnet**, daß das Kopfstück (17) des Zentrierdorns (16) flach ausgebildet ist.

FIG.1

FIG.2